# EUROPEAN PATENT APPLICATION

(11) **EP 4 086 980 A1**
(43) Date of publication of application: **09.11.2022**
(21) Application number: 21382396.6
(22) Date of filing: 03.05.2021
(51) Int. Cl.: H01M 4/13, H01M 4/62, H01M 10/42, H01G 11/50, H02J 7/00, H01G 11/08, H01G 11/10, H01G 11/14

(54) **HYBRID NANOGEL ELECTRODES AND CELL STACKING IN DISTRIBUTED ARCHITECTURES FOR HIGH POWER ELECTRICAL ENERGY HYBRID STORAGE SYSTEMS**

(71) Applicant: Napptilus Battery Labs, S.L., 08039 Barcelona (ES)
(72) Inventor: GÓMEZ, Pedro, 08039 Barcelona (ES); AIBAR, Jordi, 08039 Barcelona (ES); ALARCÓN, Eduard, 08039 Barcelona (ES); TERRADAS, Rafael, 08039 Barcelona (ES); RUEDA, Daniel, 08039 Barcelona (ES); FABIÁN, Verónica, 08039 Barcelona (ES); SAAD, Mohamed, 08039 Barcelona (ES); BETOLAZA, Ramón, 08039 Barcelona (ES)
(74) Representative: Carbonell Callicó, Josep

(57) **Abstract**

A complete energy storage system with intertwined distributed architecture for biasing and extraction of electricity from a collection of stacks of hybrid cells, in pursuit of highpower and high-energy. The structure including an energy management subsystem co-llocated by each hybrid cell, to optimally extract electricity, based upon dynamic current and voltage monitoring, biasing and efficient extraction. The cells consist of hybrid energy storage devices integrating multiple materials in a single functional bulk mass comprising a current-collector network, a capacitive component, electroactive species and nanoconfined electrolytes in ion-conducting nanochannels in the form of nano-structured gels with built-in mechanical pressure for optimized delivery of electricity.

## Description

### Field of invention

The present invention belongs to the field of electrical energy storage. It provides an integral approach for optimized energy storage in hybrid devices encompassing a novel design of hybrid nanogel electrodes and a complete system architecture with intertwined distributed electrical system for biasing and extraction of energy.

### State of the art

Despite recent progress in batteries and supercapacitors, electrical energy storage is still in crucial need of simultaneous improvement of energy and power. However, in present state of the art, batteries and supercapacitors lag behind in intrinsic power and energy densities respectively. These handicaps can be circumvented to a certain extent by imposing charging and discharing conditions. But forcing batteries to provide high power is always at the expense of a drastic drop in energy and cyclability, whereas supercapacitors cannot even be forced to provide enhanced energy density. The simple approach of combining batteries and supercaps tackles the energy-power dilemma in a different way but multiplies the complexity and cost of the system. In turn, hybrid devices formed by one battery-like and one capacitor-like electrode have been more recently developed (i.e. Li-Ion Capacitors or Hybrid Ion Capacitors). Yet, other forms of hybridization with potential of enhanced performance are possible in the form of internal electrode hybridization. Furthermore, the electronic management aiming to the extraction of electricity for these emerging hybrid devices has never been specifically adapted to their hybrid nature and thus, they are still infra-utilized. Finally, the challenge still remains of upscaling the concurrent extraction of large energy and power levels with a collection of such devices.

Supercapacitors are electrical energy storage devices with higher power density than batteries because the storing mechanism lies just on the electrode's surface through the formation of an electric double layer, this is, there is no ion diffusion through the electrolyte and the active material. Nevertheless, because charge is just stored on the electrode's surface in a supercapacitor, the energy density of the supercapacitors is smaller than in batteries.

Batteries have intrinsic limitations related to limited power, since their working mechanism is based upon electro-ionic transport. This means that ions and electrons must be transferred simultaneously from one electrode to the other in order to store or deliver energy. Thus batteries cannot provide high power because electron transport is slowed down by ion diffusionin order to keep the electroneutrality.

Limited cycle life is another hampering attribute for batteries. Typical values are around 10³ cycles while supercapacitors can easily reach 10⁵-10⁶ cycles. Phase changes and spurious reactions in the active materials are the main reason for the smaller cycle life of batteries in comparison with supercapacitors, which just store charge through a "simple" electrostatic mechanism on the electrodes surface which produce a minimal wear.

Electrode hybrid materials combine components that have redox activity (as in batteries) with others featuring capacitive behaviour (as in supercapacitors). They can provide a solution to improve power, energy density, and cycle life at the same time thanks to the positivecontribution of the combination of redox and capacitive mechanisms.

Moreover, the electrode preparation for both batteries and supercapacitors is as important as the nature of the electroactive material. Electrodes are generally based on a metallic current collector (Al or Cu) on top of which a coating of a mixture is cast that consists of active material, a conductive additive and a binder. The thinner the coating, the higher the energy density per mass of coating, power and cycle life. That is the reason why coatings used in commercial batteries are very thin, below 100 µm. Thicker electrodes lead to a poor performance especially in cycle life and power. From the perspective of the whole device, thin electrodes are an important drawback because they imply the use of a large mass and volume of current collectors, and as a consequence, just a relatively small part of the whole volume of the device(battery or supercapacitor) is used to store charge.

Nanogel electrodes could help reduce that problem and, in addition, could save a lot the time and energy needed to dry and cast the coating of the solid electrodes, making electrode fabrication faster, easier, and cheaper.

Hence, a practical solution in order to improve the electrical delivery capability of current energy storage devices can be achived by the use of nanogel-based good performing thicker electrodes due to the substantial increase of the amount of active material per volume of device.

### Brief description of the invention

The present invention describes a new integrated concept of electrical energy storage of two innovations in tightly interplay: i) the use of hybrid gel electrodes that incorporate optimized electroactivity, electronic and ionic transport in themselves, and ii) an energy management architecture with intertwined distributed electrical system for biasing and extraction of energy. This twofold bottom-up and top-down approach will allow to increase the energy density, power and cycle life of the current electrical energy storage devices.

Gel electrodes provide a structural scaffold making feasible the utilization of larger amounts of active material per volume of the device and thus leading to an increase of its overall energy rating. This invention improves upon conventional, solid electrodes which are able to provide less reversible charge as their thickness is increased. Thus, in this invention we use Nanogel electrodes based on a percolating carbon backbone held in place by a suitable co-polymer gel incorporating in turn the electrolyte instead of the solid and thin coating used in current commercial devices (whether rechargeable batteries or supercapacitors).

Since the electrolyte is intertwined with the electrode material, thus effectively wetting all of the active material particles, the electrodes used in the present invention are able to provide effective storage capabilities even with a thickness of 2mm or more. Carbon micro- and nanoparticles are key solid components acting like a functional backbone in the title nanogels. They play two roles: as electronic conductors and as capacitive materials. First, they provide a bulk percolation network that acts effectively as a 3D electrode with a fractal structure. Second, they act as a supercapacitor electrode material providing high power and long cycle life to the device.

Polymers and copolymers used in the title nanogels act as molecular scaffolds preventing the aggregation of the carbon micro/nano particles. Thus, they ensure the homogeneous distribution of solid particles (carbons and other active materials) throughout the whole volume of the electrodes.

Nanosized active redox elements can be added to the components mentioned above in order to generate the hybrid nanogel. Depending on their nature and particle size they can be adsorbed or combined with the carbon micro and nanoparticles. The active redox elements can be ions, molecules, molecular clusters or nanoparticles. Larger (micro) particles of solid redox active materials would lead to limitations in power and cycle life typically suffered by batteries due to the unavoidable and hindering solid ion diffusion through extended phases aswell as to phase changes and generation of defects in the solid materials upon cycling.

The electrolyte of the title nanogels can be based on aqueous solutions or organic solvent solutions: A mixture of organic solvents based on a high dielectric constant solvent, like N- methylformamide (NMF), and a low viscous solvent, like acetonitrile (MeCN) is presented here as a prototypical example, without excluding other formulations.

Organic electrolytes are used to reach higher voltage values (larger than the thermodynamic limit of 1.2V for water splitting). On the other hand, aqueous electrolytes can also be used for this purpose by using a very high salt concentration, above 5M. In those cases voltages of upto 4V can be reached.

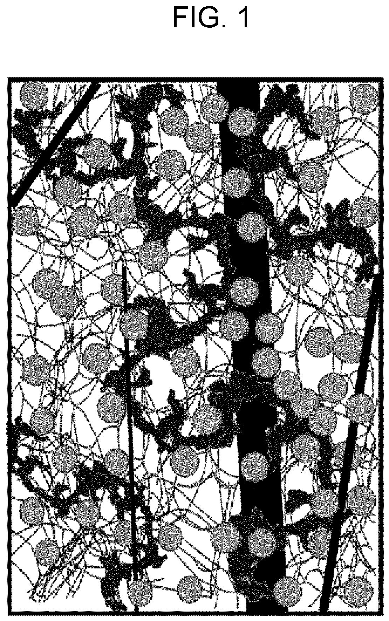

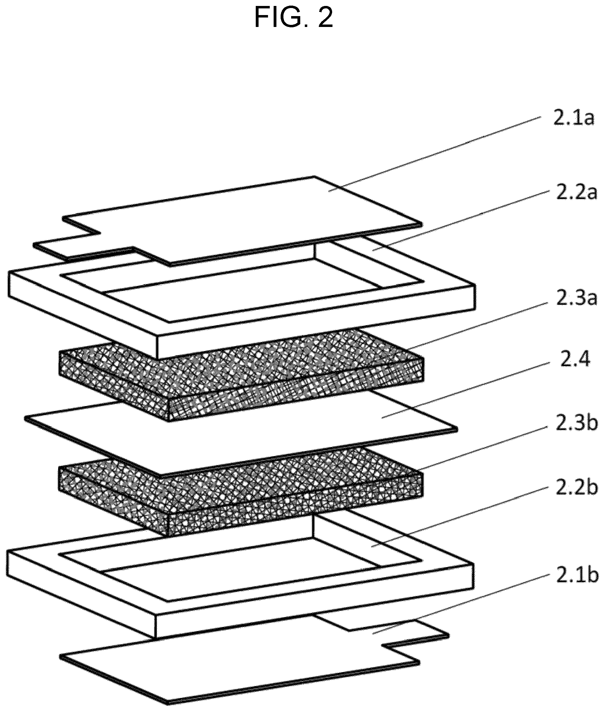

Two nanogel electrodes (schematically depicted in Figure 1), either identical or different from each other are combined in a single cell as despicted in Figure 2 with a thin separator to avoid short-circuit and the corresponding current collectors and seals in an arrangement which couldbe able to keep the electrodes under pressure.

The separator that isolates both gel electrodes within every electrochemical cell is an ion- permeable membrane that allows certain type of ions to pass through. This membrane can be made of the same polymer that constitutes the scaffold part of the electrode. In the assembly of the cell, rubber frames clamp the separator, ensuring its position and isolating it from the environment, thus avoiding losses by capillarity and evaporation of part of the electrolyte that makes up the hybrid paste.

The hybrid device enhanced with the electromechanical structure results in a self-contained cell with the enhanced electrical attributes due to the aforementioned descriptions. The hybrid nature though requires proper electronics to optimize the cell operation and the extraction of electricity. The system hence includes an energy management subsystem co-llocated by each hybrid cell, which conducts dynamic current and voltage monitoring and adjusts the charge impedance and efficienty bidirectionally transfers electricity out and in of the cell.

Finally, aiming to increase the overall attributed to deliver electricity for the energy storage system, with concurrent high power and high energy capabilities, a modular architecture is proposed that intertwines an array of hybrid cells co-located with energy management subsystems in the form of a distributed and scalable modular array system.

### Description of the figures

FIG 1. A schematic cross-section of a typical Gel electrode (i.e. 2.3 in Figure 2), showing the different components: polymer scaffold (thin lines), nanocarbon network (black fractals), electroactive redox clusters/nanoparticles (circles), carbon micro/nanofibers (straight black lines) and electrolyte (remaining empty space).
FIG. 2 shows an exploded view of the electromechanical unit with the following structure: anode current collector (2.1a), anode rubber frame (2.2a), anode hybrid paste (2.3a), separator (2.4), cathode current collector (2.3b), cathode rubber frame (2.2b) and cathode current collector (2.1b).

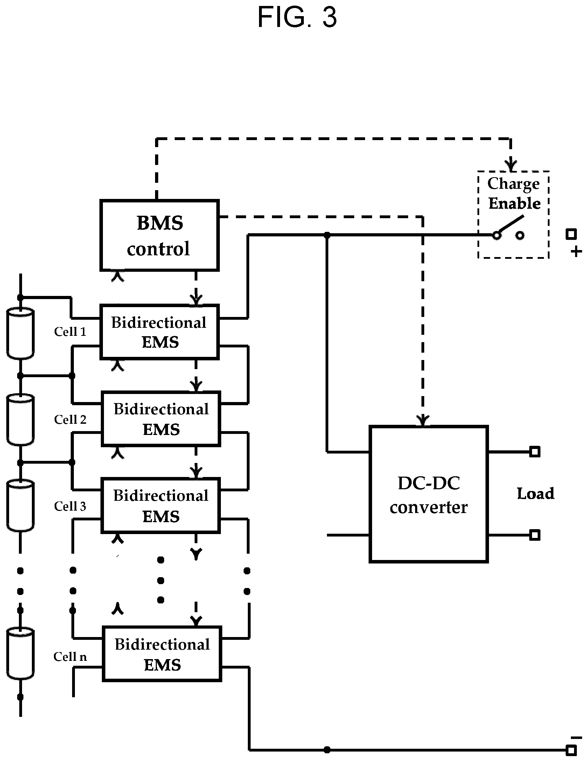

FIG. 3 shows the electronic structure for a 1D array of cells, in which energy management subsystem (EMS) for charging, discharging, and monitoring the hybril cells in an energy storage system pack. Every hybrid cell is handled by a bidirectional EMS that is capable of charging or discharging the individual hybrid cell independently from the other cells. The outputs of the plurality of EMS circuits are summed serially and fed to a central power processing unit referred as high-efficiency DC-DC converter. The central DC-DC converter serves to supply the load. The EMS also includes a central battery management system (BMS) control that monitors the plurality of the cells, command and control the charging and discharging profiles of the plurality of EMSs, command and control the central DC-DC converter, and control the charging switch for external power source connection.

## Claims

1. A complete energy storage system with intertwined distributed architecture for biasing and extraction of electricity from a collection of stacks of hybrid cells, in pursuit of high- power and high-energy.

2. The structure in claim 1 including an energy management subsystem co-llocated by each hybrid cell, to optimally extract electricity, based upon dynamic current and voltage monitoring, biasing and efficient extraction.

3. The cells in 1, managed by the circuit in 2, consisting of hybrid energy storage devices integrating multiple materials in a single functional bulk mass comprising a current- collector network, a capacitive component, electroactive species and nanoconfined electrolytes in ion-conducting nanochannels in the form of nano-structured gels with built-in mechanical pressure for optimized delivery of electricity.
